# EUROPEAN PATENT APPLICATION

(11) **EP 1 829 452 A1**
(43) Date of publication of application: **05.09.2007**
(21) Application number: 05734317.0
(22) Date of filing: 13.04.2005
(51) Int. Cl.: A23D 7/02

(54) **MICROEMULSION OF POLAR ANTIOXIDANTS IN EDIBLE OILS**

(30) Priority: 23.12.2004 ES 200403137
(71) Applicant: Natraceutical Industrial S.L.U., 46930 Quart De Poblet (ES)
(72) Inventor: GALDON MIQUEL, Fernando, E-46930 Quart De Poblet (ES); PUENTE TOMAS, Muguel Angel, E-46930 Quart De Poblet (ES); IBARRA, Alvin, E-46930 Quart De Poblet (ES)
(74) Representative: Torras Toll, Jorge
(86) International application number: PCT/ES2005/000191
(87) International publication number: WO 2006/070026

(57) **Abstract**

The basis of this invention consists of the formation of microemulsions from a polar antioxidant-rich fraction in an oily medium, specifically in edible oils. These microemulsions are **characterized in that** their stability and homogeneity makes them suitable to incorporate them in different foods or pharmaceutical products. The most novel factor of this invention is that the critical micellar concentration (CMC) is attained by vacuum elimination of the excess polar solvent, which is the antioxidant matrix, leaving part of this solvent in the microemulsion, acting as co-surfactant.

## Description

The object of the present invention, as is expressed in the heading of this specification, consists of a process of MICROEMULSION OF POLAR ANTIOXIDANTS IN EDIBLE OILS.

Nowadays, there is great interest due to the properties that polyphenols and other polar antioxidants such as vitamin C have on the health. These types of products are naturally present in several foods. Nevertheless, they have limited solubility, their application being restricted to products such as edible oils or margarines where polar antioxidants are not soluble.

On occasions, it is possible to distribute polar antioxidants in a non-polar medium such as edible oils by dispersion. Normally in the industry they are carried our by micronizing the enriched extracts in polyphenol compounds and they are dispersed in an oily medium. Nevertheless, these dispersions are unstable and end up producing the decantation of the dispersed colloids. To attain a stable product of polar antioxidants in edible oils microemulsions can be used which is the object of the invention. The main difference between an emulsion and a microemulsion lies in its appearance. Emulsions obtained by dispersion have a high degree of turbidity, whilst microemulsions are practically transparent. This is due to the size of the drops in the emulsions. Those which contain drops of size equal to or greater than the wavelength of light reflect it, causing turbidity. However, the size of the drops of a microemulsion is less than the wavelength of light for which reason their interaction with it is limited to direct collision. The light passes through the microemulsion with very little reflection, which makes it appear practically transparent. Microemulsions are thermodynamically stable, with few exceptions wherein they are unstable. The free surface energy of a microemulsion has two components: stretching (positive contribution) and bending (negative contribution). One compensates the other and the total free surface area is very small, around 10⁻³ nN/m. Furthermore, microemulsions form spontaneously or need little stirring time for their components to mix.

Since the first microemulsion system was described by Schulman and Hoar (1943), a large number of articles have been published on the matter. Nevertheless, most of the systems described are not suitable for pharmaceutical or food use.

Microemulsions are generally defined as isotropic and thermodynamically stable mixtures of at least three components: the matrix, the solvent (which is encapsulated in the micelles) and the surfactant, normally in combination with a co-surfactant which is usually a short-chain alcohol or a lipoprotein (Aboofazeli and Lawrence, 1994). Microemulsions are isotropic systems where the surfactant and the co-surfactant are located on the separation surface of the two immiscible liquids to stabilize their mutual dispersion (Bourrel and Schechter, 1988).

Microemulsions have the following distinctive characteristics: a relatively large interfacial area, an extremely low interfacial surface tension and a great solubility capacity compared with other colloidal systems (El-Nokaly et al., 1991).

Microemulsions are formed by colloidal aggregates of amphipathic molecules (surfactant). The quantity of molecular aggregates in one micelle (aggregation number) is between 50 and 100.

The range of concentrations which separate the limit under which micelles are not detected and above which all the additional surfactant molecules form micelles is relatively small. Many of the properties of surfactant solutions, when graphically represented against the concentration, seem to change in different proportions, above and below this range.

The HLB (Hydrophilic and Lipophilic Balance) index has an arbitrary scale from 0 to 40 which represents the hydrophilic and lipophilic balance of a surfactant. Products with a low HLB are more soluble in oil, whilst with a high HLB they have good water solubility. The HLB value of a water in oil emulsion system is between 3 and 6, a wetting agent between 7-9, an oil in water emulsion between 8-15, a detergent 12-15, a solubilizer 15-18, etc.

The list of surfactants which can be used to obtain microemulsions in this patent is described, but not limited thereto, in table 1.

**Table 1. Chemical classification of food emulsions and legal status (US FDA 21 CFR*)**

| **Surfactants and co-surfactants** | **HLB** | **ADI values ** Mg/kg body t/day** |
|---|---|---|
| Mono- and diglycerides and lecithin | 3-4 | unlimited |
| Lactic acid esters of monoglycerides | 3-4 | unlimited |
| Citric acid esters of monoglycerides | 3-4 | unlimited |
| Fatty acid esters of propylene glycol | 3-4 | 25 |
| Fatty acid esters of polyglycerides | 1-12 | 10 |
| Sorbitan esters | 2-9 | -- |

| | | |
|---|---|---|
| *Federal Drug Administration 21 Code of Federal Regulation ** ADI = Acceptable Daily Intake (in humans) | | |

Lecithin is obtained for commercial purposes from seeds from which oil is produced (in particular soy seed) and from egg yolk. In the lecithin molecule, the phosphoric acid is bound to a primary hydroxy group of glycerine and a chloride group. Soy lecithin contains only 33% percent lecithin, it contains more than 15% inistophosphatides and approximately 25% kephalin with other bonds. Lecithin is used, for example, during the margarine production process to decrease surface tension and obtain a good distribution of the aqueous phase (Baltes 1995).

Pure ethanol works as co-surfactant to prepare microemulsions, in particular, when lecithin or monooleic acid is used as surfactant. Furthermore, it helps to solubilize the lecithin in edible oils. Normally, alcohols are not suitable for food use, but the use of a small amount of ethanol (approximately 5%) in products of this type is acceptable (Osborne et al., 1991). .

The basis of this patent consists of a polar microemulsion (water, alcohol or mixture of both) in a non-polar matrix (edible oil) which is stable, transparent and homogenous, and wherein the polar antioxidants are soluble or partially soluble in the polar fraction.

Several edible oils can be used as matrix to stabilize the microemulsions, preferable those rich in polyunsaturated fatty acids such as oleic acid, linoleic acid or stearic acid; for example, olive oil, sunflower oil and others.

Only edible oils which contain triglycerides with at least 30% saturated fatty acids can be used to form microemulsions. Examples of these oils are found in table 2.

**Table 2. List of some of the edible oils with less than 30% saturated fatty acids in their composition.**

| Edible oils | | Produced by fractional crystallization (molar %) | | | |
|---|---|---|---|---|---|
| | S (% molar) | GS₃ | GS₂U | GSU₂ | GU₃ |
| Almond oil | 6 | - | - | 17 | 83 |
| Saffron oil | 6 | - | - | 18 | 82 |
| Olive oil | 15 | - | - | 45 | 55 |
| Sunflower oil | 15 | - | - | No data | No data |
| Gray seed oil | 17 | - | - | 51 | 49 |
| Peanut oil | 19 | - | 1 | 56 | 43 |
| Herring oil | 23 | - | 4 | 61 | 35 |
| Cottonseed oil | 28 | - | 13 | 59 | 28 |

| | | | | | |
|---|---|---|---|---|---|
| G=Glycerides S=Saturated fatty acid U= Unsaturated fatty acid | | | | | |

Polar solvents which can be used in this invention include those which have been approved for use in the food industry in the American and European food codes. For example, water and ethanol.

In the present invention, several types of antioxidants can be used to prepare these microemulsions, preferably polyphenols and vitamin C. In the case of polyphenols, due to their solubility, preferably those with a molecular weight less than 7000 daltons are used. The most used polyphenols in the invention are in table 3, however, polyphenols can be used from other sources to prepare these microemulsions. Furthermore, there are several sources to obtain ascorbic acid (vitamin C) such as citrus fruit, grapes and others.

**Table 3. List of some polar antioxidants**

| **Class** | **Name** | **Natural source** |
|---|---|---|
| Chalcone | Butein | Miscellaneous |
| | Okanin | |
| Flavone | Chrysin | Fruit peel |
| | Apigenin | Parsley, Celery |
| | Rutin | Wheat, chilli pepper Red wine, tomato skin |
| Flavanone | Naringin | Citrus fruits, grapefruit |
| | Naringenin | Citrus fruits |
| | Taxifolin | Citrus fruits |
| | Eriodictyol | Lemon |
| | Hesperidin | Orange |
| | Isosakuratenin | Citrus fruits |
| Flavonol | Kaemferol | Broccoli, leeks, endives |
| | | Grapefruit, Black tea |
| | Quercetin | Onion, Lettuce, Broccoli |
| | | Tomato, Tea, Berries |
| | | Apple, olive oil |
| Flavononol | Engeletin | White grape skin |
| | Astilbin | White grape skin |
| | Genistin | Soybean |
| | Taxifolin | Fruit |
| Isoflavone | Genistein | Soybean |
| | Daidzin | Soybean |
| | Daidzein | Soybean |
| Flavanol | (+)-catechin | Tea, unfermented cacao |
| | (+)-gallocatechin | |
| | (-)-epitechin | |
| | (-)-epigallocatechin | |
| | (-)-epicatechin gallate | |
| Anthocyanidin | Apigenidin | Stored fruit |
| | Cyanidin | Cherry, Strawberry, |
| | | Raspberry |
| | Delphinium | Black fruits |
| | Pelargonidin | Black fruits |
| Sechoroids and derivates | Oleuropein | Olive and olive oil |
| | Hydroxytyrosol | |
| | Tyrosol | |
| | Verbascoside | |
| Phenolic diterpenes | Carnosic acid | Rosemary |
| | Carnosol | |
| Lignans and lignins | Silymarin | Silybum marianum |
| Stibene | Resveratrol | Grape, wine |

### REFERENCES

Swern D. 1979. Bailey's industrial oil and fat products. John Wiley and Sons, INC.
Sahadi F. and Nazck M. 2004. Phenolics in food and natraceuticals. CRC press. Aboofazeli.; Lawrence, M. J, Investigations in the formation and characterization of phospholipids microemulsions. II: Pseudo-ternary phase diagrams of systems containing water-lecithin-isopropyl myristate and alcohol: influence of purity of lecithin. Int. J. Pharm. 106 (1994) 51-61.
Bourrel, M.; Schechter, R. S. Microemulsions and related systems. Formulations solvency and physical properties. Surfactant Science Series 30, Marcel Dekker, New York (1988), 27.
Schulman, J. H.; Hoar, T. P. Transparent water in oil dispersions: oleophatic hydromicelle. Nature 152 (1943), 102-103
Von Corswant, C; Engström, S.; Söderman, O. Microemulsions based on soybean phosphatidylchlorine and triglycerides. Phase behaviour and microstructure. Langmuir 13 (1997), 5061-5070.
Osborne D. W.; Pesheeck, C. V.; Chipman R. J. Dioctyl sodium sulfosuccinate-sorbitan monolaurate microemulsions. In. "Microemulsions and emulsions in food," El-Nokaly, M.; Cornell, D., Eds., ACS Symposium Series No. 448, American Chemical Society, Washington DC, (1991), p. 63-79.

### DESCRIPTION OF THE INVENTION

The microemulsion production process begins with a concentration of soluble antioxidants in polar solvents authorized for use for human consumption (for example, ethanol and water or a mixture of both). The most widely used antioxidants are the polyphenols which appear in table 3, vitamin C, or a mixture of these compounds.

In the present invention, the natural extracts of polar antioxidants or concentrates thereof, enriched with an active principle, are preferred.

The antioxidant-enriched compounds are 100% natural. The process starts with a raw material which comes from plant sources, for which reason it is not always possible to obtain a high concentration level in the extract. Preferably, the concentrate production processes are achieved by solubilization, filtration and/or centrifugation, in addition to partial concentration processes. Other technologies suitable for concentrating antioxidants in polar solvents would be ultrafiltration, nanofiltration and reverse osmosis. Special systems can also be used such as solid-liquid and liquid-liquid separations and molecular distillation.

With this type of technologies, the variations in the concentration of the final active compound depend on several factors such as the variety of the raw materials, the degree of ripeness and the solubilization conditions among others.

The initial concentration for micelles to form should be high enough to guarantee a suitable concentration of active principles in the final product. It is very important to maintain this concentration to avoid precipitation. For example, a concentration of flavonoids in the solvent (w/V) should be greater than 0.5%, preferably more than 5%, for example more than 15%, where, preferably, the solvent would be water, ethanol or a mixture of both.

The polar solvents used herein are those accepted by the American and European food codes.

As the concentrations used in this invention are natural extracts, there are not only antioxidants in the solution. There are other compounds which may be present in the extract in a soluble, insoluble or partially soluble form. The impurities may include macromolecules such as chlorophylls, proteins, essential oils, starch, fibres and organic and inorganic molecules insoluble in the polar fraction. The maximum limit of these impurities is 80% (w/V) although it is recommendable that it is less than 30% (w/V), for example less than 10% (w/V). Optionally, the concentrates may be optionally purified to only produce those antioxidant compounds soluble in water, without having any other type of disperse component.

The impurity elimination process can be performed by several methods such as: absorption with inert filtration agents; diatomaceous earths, active carbon and zeolites. Membrane separations systems such as ultrafiltration, nanofiltration and reverse osmosis can also be used to purify the solution. The method used depends on the nature of the extract. One of the methods or the combination of several of the abovementioned can be used to prepare the extract.

During the purification, a certain fraction of the active components can be lost. In the same way, the chosen purification method should minimize the loss of antioxidants. It would be suitable to lose no more than 20% (w/w) and preferably less than 10% (w/w), for example less than 3% (w/w) of the active principle with respect to the initial antioxidant.

In another part of the invention, the antioxidants concentrate is mixed with edible oil. The proportion of "concentrate/edible oil" depends on the nature of the extract. Normally, this proportion should be less than 1/1, preferably being ½ or even better 1/4. At these concentrations, the critical micellar concentration is not reached as the concentration of the polar solvent is excessive. The method to eliminate the excess solvent to reach the critical micellar concentration will be explained further on.

In this invention edible oil is preferably used to form the microemulsion. Furthermore, these oils should have a percentage of saturated fatty acids in the triglycerides less than 30%, preferably less than 20%, for example 15%. Samples of these types of oil would be olive, sunflower or cottonseed (see table 2).

Certain parameters such as temperature should be controlled during the mixture. The appropriate temperatures are between 0°C and 65°C, preferably being those below 40°C.

Another parameter which may be controlled depending on the nature of the extract is the composition or type of gas used. Normally, the use of air is sufficient to mix the extract and the edible oil, but other gases can be used to protect the active principles from oxygen, for example, inert gases such as nitrogen or carbon dioxide.

The inert gases also protect the edible oils from oxidation.

The mixture of the extract and the oils may preferably be carried out in a tank or in another suitable industrial container, preferably stainless steel to prevent oxidation.

The mixture should be stirred continuously to homogenize the fractions, simultaneously adding the surfactant and the co-surfactant. The microemulsion can contain between 0.1 and 15% (w/V) of surfactant and co-surfactant.

The surfactants used in this invention are those permitted in the food industry and which are capable of forming a microemulsion in the compositions indicated therein.

The most widely used are: lipoproteins, monoglycerides, diglycerides and lecithin, fatty acid esters of monoglycerides, fatty acid esters of sucrose, sorbitan esters or more combinations thereof (table 1).

As co-surfactant it is preferable to use a non-toxic amphiphillic molecule, such as an alcohol (example ethanol), an acid (example acetic acid), an ester (example butyl lactate) or mixture thereof.

The co-surfactant or co-solvent has the function of increasing the concentration range of the component to form stable microemulsions. Furthermore, the same co-surfactant can be used as taste or smell modifier, preservative or another type of functional additive.

Salts can also be added to the microemulsion to decrease the Critical Micellar Concentration and to disperse the antioxidant microemulsions. In the present invention, only sodium chloride should be used if possible. The suitable concentration can range between 0.02 and 0.4 mol/L, being more suitable between 0.1 and 0.3 mol/L, for example, 0.2 mol/L. The microemulsion comprises one or more salts. The presence of the co-surfactant is useful to incorporate a great quantity of salt, e.g. 0.2M in aqueous phase or even higher.

According to the invention, the quantities of antioxidant concentrate, edible oil and surfactant are not normally added in the suitable proportion to reach the Critical Micellar Concentration.

Normally, the polar solvent is found in excess to ensure the total solubility of the antioxidants. Further on, the excess is eliminated by drying until reaching the critical Micellar Concentration.

For the invention to be better executed, the solvent mixture (with soluble active ingredients), edible oils, surfactants, co-surfactants and optional salts is subjected to vacuum evaporation until reaching the Critical Micellar Concentration.

### EXAMPLES OF EMBODIMENT

### Example 1. Rosemary extract microemulsion.

1000L of methanol is added to 100 kg of dry rosemary leaf and finely ground, which contains 7.3 % carnosic acid. The solid-liquid extraction consists of 3 stages: R₁ (1/4) w/V, R₂ (1/3) w/W and R₃ (1/3) w/V, the extraction time is 3 hours at ambient temperature. 900L of extract is obtained by vacuum filtration of the biomass. This is then concentrated, by vacuum filtration, at 50 mmHg and 45°C, producing approximately 30L of concentrated extract. To the concentrated solution of carnosic acid, 30L of water are added at ambient temperature. The solution is decanted and filtered to eliminate the water and the methanol. The final insoluble product has a methanol content less than 10 ppm.

The insoluble product, 17 kg of green extract contains 18% w/w of carnosic acid. This precipitate is dissolved at ambient temperature, constantly stirring it with 30L of ethanol, then 0.7 kg of active carbon is added to the solution maintaining the temperature and stirring conditions for one hour. The resulting decoloured solution is vacuum filtered separating the active carbon and the chlorophyll fraction from the extract. The final extract has a creamy brown colour. To this solution 30L of sunflower oil and 0.3 kg of lecithin are added and it is concentrated by evaporation, at 100 mmHg and 40°C. The residual solvent is eliminated by vacuum evaporation until producing 32 kg of a creamy brown coloured viscous microemulsion.

### Example 2. Olive extract microemulsion.

1000L of ethanol:water 70:30 (v/v) is added to 100 kg of defatted olive powder, dried and finely ground. The olives have the following composition: 52% cellulose, 10% proteins, 5% ash and 1.1% polyphenols. The solid liquid extraction consists of two stages: R₁ (1/5) w/V and R₂ (1/5) w/V.

The extraction process takes 3 hours at ambient temperature. 870L of extract is produced by filtration and ultrafiltration. The polyphenol rich solution is vacuum concentrated to 1000 mmHg and 40°C, producing 55L of concentrate. The solution has a concentration of 252 g/L of total solids, of which 6% are polyphenols in the extract.

55L of olive oil and 1.3 kg of monoglycerides and diglycerides are added to the solution and they are evaporated at 100 mmHg and 40°C. The residual solvent is partially eliminated in the vacuum drying until obtaining 80 kg of microemulsion. The polyphenol concentration is 1 % and the total process yield is 80%.

### Example 3. Cacao extract microemulsion.

1500L of water is added to 100 kg of dry, unfermented defatted cacao extract and finely ground with a content of 10% polyphenols. The solid-liquid extraction consists of 2 stages: R₁ 1/8 (w/V) and R₂ 1/7 (w/V).

The extraction time takes 3 hours at ambient pressure and at 30°C. 1300L of extract are produced by centrifugation of the biomass and it is then concentrated by vacuum evaporation at 100 mmHg and 55°C, producing approximately 60L of concentrated extract. The solution concentration is 300g/L of total solids, of which 26% are polyphenols.

66 L of cotton oil and 1 kg of lecithin are added to the solution and the concentrate is evaporated at 30 mmHg and 60°C. The residual solvent is partially eliminated by a vacuum pump until producing 73 kg of microemulsion. The polyphenol concentration is 6.4 % and the total process yield is 73%.

Having established the expressed concept, the claims are written below, this synthesizing the novelties to be claimed:

## Claims

1. Process for producing microemulsions of polar antioxidants in edible oils, **characterized in that** the Critical Micellar Concentration (CMC) is attained by eliminating the excess polar solvent by vacuum drying.

2. Process according to the preceding claim, **characterized in that** the most convenient polar antioxidants are polyphenols and/or vitamin C or a mixture thereof.

3. A process according to preceding claims, **characterized in that** said antioxidants come from plant sources.

4. Process according to preceding claims, **characterized in that** the polar antioxidants are produced by natural solubilization, filtration and/or centrifugation and partial concentration stages, including other options through stages such solid-liquid extraction, liquid-liquid extraction and molecular distillation.

5. Process according to preceding claims, **characterized in that** the polar antioxidant concentrations are subjected to a clarification stage to eliminate part of the impurities by absorption with filtration aids such as active carbon, diatomaceous earth and zeolites to purify the solution.

6. Process according to claim 4, **characterized in that** the polar antioxidants are concentrated further by using membrane separation technologies such as, for example: microfiltration, ultrafiltration, nanofiltration and reverse osmosis.

7. Process according to preceding claims, **characterized in that** the antioxidant concentration in polar solvents is greater than 0.5%.

8. Process according to preceding claims, **characterized in that** the antioxidant concentration in polar solvents is preferably greater than 5% (w/V).

9. Process according to preceding claims, **characterized in that** the antioxidant concentration in polar solvents is 15%.

10. Process according to preceding claims, **characterized in that** the polar antioxidants are soluble in solvents authorized by the Codex Alimentarius.

11. Process according to preceding claims, **characterized in that** said polar antioxidant concentrates are not a pure solution since they contain other impurities such as chlorophylls, proteins, essential oils, sugars, fibres and other molecules soluble and insoluble in the polar fraction.

12. Process according to preceding claims, **characterized in that** the maximum impurities limit should be 60% (w/w).

13. Process according to preceding claims, **characterized in that** the maximum impurities limit should preferably be less than 30% (w/w).

14. Process according to preceding claims, **characterized in that** the maximum impurities limit is 10% (w/w).

15. Process according to preceding claims, **characterized in that** in case of losing certain fractions of the active principle with respect to the initial antioxidant, less than 60% should be lost.

16. Process according to preceding claims, **characterized in that** in case of losing certain fractions of the active principle with respect to the initial antioxidant, preferably less than 40% should be lost.

17. Process according to preceding claims, **characterized in that** in case of losing certain fractions of the active principle with respect to the initial antioxidant, 10 % should preferably be lost.

18. Process according to preceding claims, **characterized in that** the "antioxidant concentrate/edible oil" proportion is less than 1/1.

19. Process according to preceding claims, **characterized in that** the "antioxidant concentrate/edible oil" proportion is less than 1/2.

20. Process according to preceding claims, **characterized in that** the "antioxidant concentrate/edible oil" proportion is less than 1/4.

21. Process according to preceding claims, **characterized in that** the edible oils should have a percentage of saturated fatty acids in the triglyceride of less than 30%. Examples of this type of oils are: olive, sunflower or cottonseed.

22. Process according to preceding claims, **characterized in that** the edible oils should have a percentage of saturated fatty acids in the triglyceride of less than 15%.

23. Process according to preceding claims, **characterized in that** the mixing temperature is between 0°C and 65°C.

24. Process according to preceding claims, **characterized in that** the mixing temperature is preferably below 40°C.

25. Process according to preceding claims, **characterized in that** the mixing temperature is 25°C.

26. Process according to preceding claims, **characterized in that** surfactant and/or co-surfactant concentration in the mixture to generate the microemulsion should be between 0.01 and 15%.

27. Process according to preceding claims, **characterized in that** the surfactants used are of general use in the food industry and they are capable of forming a microemulsion in the compositions indicated in the invention, the most recommendable being: lipoproteins, monoglycerides and diglycerides, fatty acid esters of propylene glycol, fatty acid esters of glyceride, sorbitan esters, lecithin or a combination thereof.

28. Process according to preceding claims, **characterized in that** the co-surfactant is preferably non-toxic, such as, for example, amphiphillic molecules such as an alcohol (ethanol), an acid (acetic acid), a butylated ester or a mixture of both.

29. Process according to preceding claims, **characterized in that** the salts are added to the mixture at a sodium chloride concentration between 0.02 and 0.4 mol/L.

30. Process according to preceding claims, **characterized in that** the sodium chloride concentration is 0.2 mol/L.

31. Process according to preceding claims, **characterized in that** the quantity of polar solvent is greater than the quantity necessary to attain the Critical Micellar Concentration.

32. Process according to preceding claims, **characterized in that** the excess polar solvent is eliminated by vacuum evaporation until reaching the Critical Micellar Concentration to form the microemulsion, the process temperature being less than 70°C.

33. Process according to preceding claims, **characterized in that** the excess polar solvent is eliminated by vacuum evaporation until reaching the Critical Micellar Concentration to form the microemulsion, the process temperature being less than 60°C.

34. Process according to preceding claims, **characterized in that** the excess polar solvent is eliminated by vacuum evaporation until reaching the Critical Micellar Concentration to form the microemulsion, the process temperature being less than 40°C.

35. Process according to preceding claims, **characterized in that** the excess polar solvent is eliminated by vacuum evaporation until reaching the Critical Micellar Concentration to form the microemulsion, the working pressure being less than 300 mbar.

36. Process according to preceding claims, **characterized in that** the excess polar solvent is eliminated by vacuum evaporation until reaching the Critical Micellar Concentration to form the microemulsion, the working pressure being less than 100 mbar.

37. Process according to preceding claims, **characterized in that** during the mixing and vacuum evaporation phase, the mass is stirred to form and disperse the micelles.

38. Application of the microemulsion, **characterized in that** it is produced following the process explained in the preceding claims, which may be used as protective agent of oxidation for different types of edible oils and fats. For example, these microemulsions can easily be added to margarines, butters and other edible oils in a wide concentration range.

39. Application of the microemulsion according to preceding claims, **characterized in that** it can be used as a vehicle of other components which positively modify the profile of the end products; for example, adding rosemary, cacao or olive aroma to the fats, oils and water in the fat emulsions.
